# EUROPEAN PATENT SPECIFICATION

(11) **EP 3 794 814 B1**
(45) Date of publication and mention of the grant of the patent: **20.03.2024**
(21) Application number: 19830787.8
(22) Date of filing: 05.07.2019
(51) Int. Cl.: H04M 1/02, H04N 5/262, H04N 23/45, H04N 23/51, H04N 23/60, H04N 23/667, H04N 23/80

(54) **ELECTRONIC DEVICE FOR CAPTURING MEDIA USING A BENDABLE DISPLAY AND METHOD THEREOF**
ELEKTRONISCHE VORRICHTUNG ZUR AUFNAHME VON MEDIEN MITTELS EINER BIEGSAMEN ANZEIGE UND VERFAHREN DAFÜR
DISPOSITIF ÉLECTRONIQUE DE CAPTURE DE CONTENU MULTIMÉDIA À L'AIDE D'UN AFFICHAGE PLIABLE ET SON PROCÉDÉ

(30) Priority: 06.07.2018 IN 201841025398; 19.03.2019 IN 201841025398; 18.06.2019 KR 20190072492
(43) Date of publication of application: 24.03.2021
(73) Proprietor: Samsung Electronics Co., Ltd., Suwon-si 16677 (KR)
(72) Inventor: YADAV, Sourabh Singh, Bangalore 560037 (IN); BAJPAI, Pankaj Kumar, Bangalore 560037 (IN); SARVESH,, Bangalore 560037 (IN); DESHPANDE, Pranav Prakash, Bangalore 560037 (IN); BOREGOWDA, Lokesh Rayasandra, Bangalore 560037 (IN); SARKAR, Rituparna, Bangalore 560037 (IN)
(74) Representative: Gulde & Partner
(86) International application number: PCT/KR2019/008323
(87) International publication number: WO 2020/009543

(56) References cited:
- CN-A- 107 820 014
- US-A1- 2009 148 149
- US-A1- 2014 002 402
- US-A1- 2016 029 007
- US-A1- 2016 093 064
- US-A1- 2016 248 985
- US-A1- 2016 248 985
- US-A1- 2017 052 566
- US-A1- 2017 052 566
- US-A1- 2017 094 168
- US-A1- 2017 236 302
- US-A1- 2017 251 193
- US-A1- 2018 033 162
- US-B1- 8 738 101
- SANG-YONG LEE ET AL: "Enhanced Autofocus Algorithm Using Robust Focus Measure and Fuzzy Reasoning", IEEE TRANSACTIONS ON CIRCUITS AND SYSTEMS FOR VIDEO TECHNOLOGY, INSTITUTE OF ELECTRICAL AND ELECTRONICS ENGINEERS, US, vol. 18, no. 9, 1 September 2008 (2008-09-01), pages 1237-1246, XP011226689, ISSN: 1051-8215, DOI: 10.1109/TCSVT.2008.924105
- EDGARDO MOLINA ET AL: "A Layered Approach for Fast Multi-view Stereo Panorama Generation", MULTIMEDIA (ISM), 2011 IEEE INTERNATIONAL SYMPOSIUM ON, IEEE, 5 December 2011 (2011-12-05), pages 589-594, XP032090793, DOI: 10.1109/ISM.2011.104 ISBN: 978-1-4577-2015-4

## Description

### [Technical Field]

The disclosure relates to capturing media. More particularly, the disclosure relates to a method and a system for capturing media by using a device including a bendable display.

### [Background Art]

Devices including a bendable display may include a plurality of flaps, in which cameras can be present. The distance between cameras in different two or more flaps among the plurality of flaps can be referred to as a baseline distance. In current devices, the baseline distance is fixed. As a result, the cameras may not be able to capture media (which can be at least one of image, video, and so on) with the desired effects or may not be able to reproduce a scene, as visualized by the user. For example, with a fixed baseline distance, the ability of the device to focus on objects at different depths can be limited. This is because the depth at which the device can focus is inversely proportional to the baseline distance, which is fixed. With a fixed baseline distance, the disparity map or depth map can be used. In another example, the efficiency of three dimensional (3D) reconstruction is likely to be minimized. With a fixed baseline distance, the capturing can be limited to planar stereo, single view point stereo, and so on.

US 2016/0248985 A1 discloses a method comprising obtaining a desired field of view (FOV) for an image arranged to be captured, determining a required field of view (r_fov) of the FOV for each active camera sensor of a camera array having a field of view (fov), comparing the r_fov and the fov, and determining a bend angle between adjacent camera sensors to achieve the FOV by camera sensors of the camera sensor array, if the r_fov is less than or equal to the fov.

US 2017/0094168 A1 discloses a device for photographing a panoramic image in a foldable electronic device, wherein the electronic device may set a photographing mode and determine the folding of a housing in the photographing mode. The electronic device may acquire images from an image sensor, the photographing position of which varies according to the folding and generate a panoramic image by composing the acquired images.

US 2017/0052566 A1 discloses a mobile terminal including a display unit disposed on a front surface and including a first portion and a second portion formed to be rotatable with respect to a boundary portion formed on one side of the first portion so as to be in a state in which the second portion covers the first portion or a state in which the second portion does not cover the first portion, a first sensing unit disposed on a left end of the terminal body and generating a first signal on the basis of a movement of the left end, a second sensing unit disposed on the right end of the terminal body and generating a second signal on the basis of a movement of the right end, and a controller controlling at least one of functions executable on the terminal on the basis of the first signal and the second signal.

US 8,738,101 B1 discloses a multi-state detachable smartphone-tablet hybrid mobile device comprising a number of display parts connected to each other. Therein, by opening one or some of the displays, more screen space becomes available, and the smartphone is therefore converted and expanded to the tablet device. With folding the displays back, the device becomes a smartphone again.

CN 107 820 014 A discloses a photographing method comprising the steps of setting a first camera and a second camera at different positions of a flexible screen, wherein the different positions indicate that a vertical plane of the first camera and a vertical plane of the second camera are not overlapped; obtaining a photographing angle in a photographing instruction; calculating a corresponding relationship between the photographing angle and a bending angle of the flexible screen according to a position relationship between the first camera and the second camera; and controlling the flexible screen to bend to the corresponding bending angle for photographing according to the photographing angle.

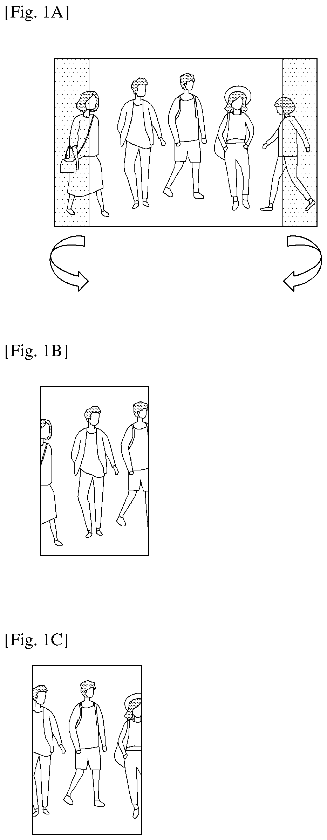

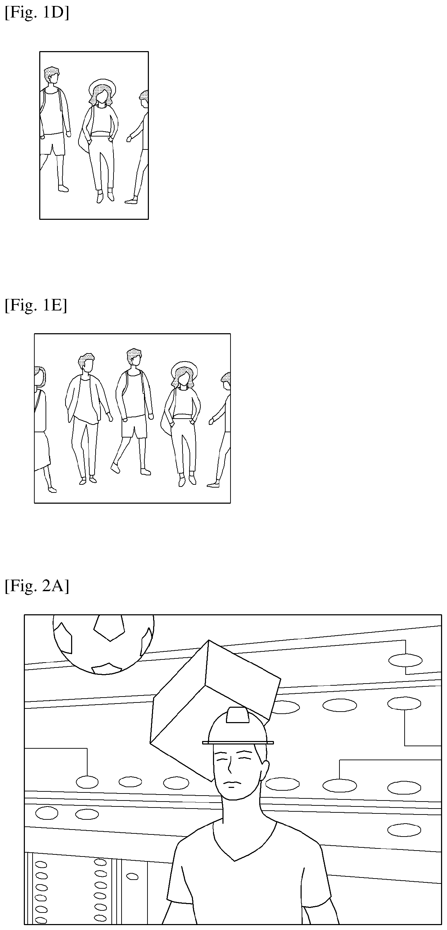

FIGS. 1A, 1B, 1C, 1D and 1E depict an example scenario, wherein a user may not be able to capture a desired wide-angle selfie shot using a device with a fixed baseline distance according to the related art. In order to capture all the subjects in a wide-angle selfie shot, the user may have to manually perform a swivel motion. If the user is unable to swivel or if there is an error in the trajectory of rotation, then the wide-angle selfie may not be captured properly.

Referring to FIG. 1A, the field of view (FoV) of the camera(s) is limited as the baseline distance is fixed. The FoV or positions of the camera(s) should be adjusted by the user to capture all the subjects.

Referring to FIGS. 1B, 1C and 1D, a left view, a center view, and a right view are illustrated, respectively, which can be obtained by adjusting the position of the camera(s) by swiveling manually. The overlapping region, rotation, and translation between the views, can be estimated for fusing the views.

FIG. 1E, depicts the fused image, which is the final wide-angle selfie shot.

Referring to FIG. 1E, a portion of some subjects is omitted due to the limited FoV of the camera(s). There can also be a possibility of artifacts, if the registration/fusion is not performed properly.

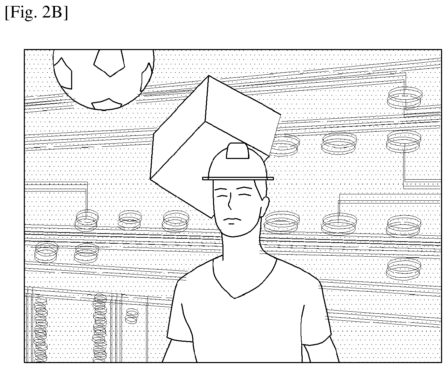

FIGS. 2A and 2B are perspective views of an example scenario, wherein selective focus can be limited to objects at a certain depth according to various embodiments of the related art.

Referring to FIG. 2A, a preview of the cameras is depicted. As depicted in FIG. 2A, there are multiple objects in the preview, located at various depths. As the baseline distance is fixed, the ability to focus on an object can depend on the depth at which the object is located. In an example, for selective focus, the distance between the object and the cameras can be in a range of 0.5-1m.

Referring to FIG. 2B, only the object which is nearest to the camera is selectively focused.

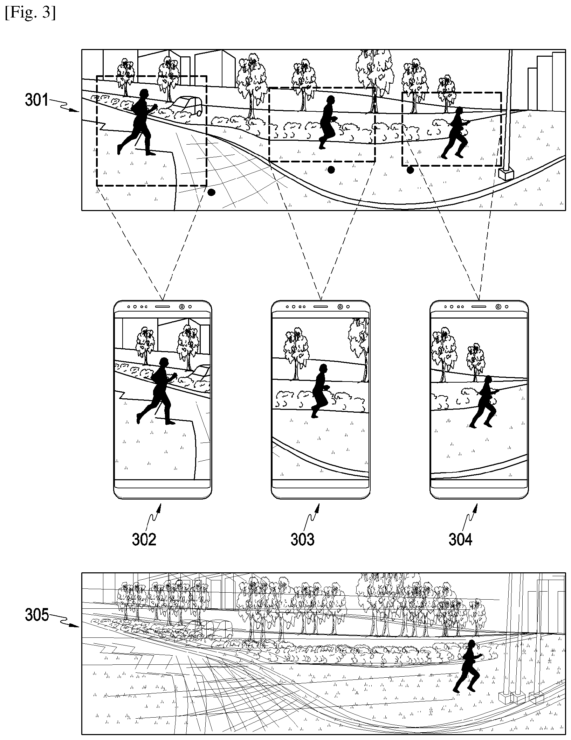

FIG. 3 is a perspective view of an example scenario, wherein tracking of an object in motion can result in background blurring according to the related art. When the user attempts to track an object in motion, in the preview, while capturing media, the background is likely to become blurred. This may be due to manual adjustment of the position(s) of the camera(s) to track the object in motion. The manual adjustment may be necessary as the baseline distance is fixed.

Referring to FIG. 3, the object is moving across a view 301, as visualized by the user. As the object moves through the view 301, the user can capture a plurality of media to track the object. The media captured by the user's manual adjustment of the camera are illustrated in captured media 302, 303, and 304. When the captured media (302-304) are fused, media 305 can be obtained. As depicted in FIG. 3, the background of the media 305 is completely blurred.

The above information is presented as background information only to assist with an understanding of the disclosure. No determination has been made, and no assertion is made, as to whether any of the above might be applicable as prior art with regard to the disclosure.

### [Disclosure of Invention]

### [Solution to Problem]

The invention provides a method for capturing media by using a device including two bendable flaps, wherein each of the flaps includes a camera, and wherein a baseline distance can be varied by adjusting a bend angle between the flaps of the device.

Aspects of the disclosure are to address at least the above-mentioned problems and/or disadvantages and to provide at least the advantages described below.

Additional aspects will be set forth in part in the description which follows and, in part, will be apparent from the description, or may be learned by practice of the presented embodiments.

In accordance with the invention, a method is provided as defined in the appended claims.

In accordance with the invention, a device is provided as defined in the appended claims.

The scope of the claimed solution is solely defined in the appended claims.

### [Brief Description of Drawings]

The above and other aspects, features, and advantages of certain embodiments of the disclosure will be more apparent from the following description taken in conjunction with the accompanying drawings, in which:
FIGS. 1A, 1B, 1C, 1D, and 1E depict an example scenario, wherein a user may not be able to capture a desired wide-angle selfie shot using a device with a fixed baseline distance according to various embodiments of the related art;
FIGS. 2A and 2B are a perspective view of an example scenario, wherein selective focus can be limited to objects at a certain depth according to various embodiments of the related art;
FIG. 3 is a perspective view of an example scenario, wherein tracking of an object in motion can result in background blurring according to the related art;
FIG. 4 depicts various units of a device for capturing media in multiple media capture modes according to various embodiments of the disclosure;
FIG. 5 is a flowchart depicting a method for capturing media using at least one media capture mode of a device according to various embodiments of the disclosure;
FIG. 6 is a flowchart depicting a not claimed method for capturing media by using the device, in a media capture mode selected by a user input;
FIGS. 7A, 7B, 7C, and 7D depict baseline distance and field of view (FoV) of cameras, which are changed in response to adjustment of a bend angle, according to various embodiments of the disclosure;
FIG. 8 depicts a user interface (UI) for controlling a bend angle between flaps when media is captured by using a device according to various embodiments of the disclosure;
FIGS. 9A, 9B, and 9C depict an example scenario where a wide-angle selfie is captured by changing a bend angle between flaps of a device according to various embodiments of the disclosure;
FIGS. 10A, 10B, and 10C depict an example where selective focus of objects at various depths is achieved by changing a bend angle between flaps of a device, according to various embodiments of the disclosure;
FIG. 11 depicts an example wherein the experience of Augmented Reality (AR) objects is visually enhanced by adjustment of bend angle between flaps of the device according to various embodiments of the disclosure; and
FIG. 12 depicts an example where a cinematic shot is captured and an object is tracked without registration error and blurring of the background, according to various embodiments of the disclosure.

Throughout the drawings, like reference numerals will be understood to refer to like parts, components, and structures.

### [Mode for the Invention]

The following description with reference to the accompanying drawings is provided to assist in a comprehensive understanding of various embodiments of the disclosure as defined by the claims and their equivalents. It includes various specific details to assist in that understanding but these are to be regarded as merely exemplary. Accordingly, those of ordinary skill in the art will recognize that various changes and modifications of the of the various embodiments described herein can be made without departing from the scope of the disclosure. In addition, descriptions of well-known functions and constructions may be omitted for clarity and conciseness.

The terms and words used in the following description and claims are not limited to the bibliographical meanings, but, are merely used by the inventor to enable a clear and consistent understanding of the disclosure. Accordingly, it should be apparent to those skilled in the art that the following description of various embodiments of the disclosure is provided for illustration purpose only and not for the purpose of limiting the disclosure as defined by the appended claims and their equivalents.

It is to be understood that the singular forms "a," "an," and "the" include plural referents unless the context clearly dictates otherwise. Thus, for example, reference to "a component surface" includes reference to one or more of such surfaces.

Embodiments of the disclosure disclose a method for capturing media in multiple modes using a device including at least one flap, wherein the at least one flap may include at least one camera. Embodiments of the disclosure may determine a field of view (FoV) of each of the cameras included in the at least one flap, and an overlap between the FoVs of the camera(s) included in the at least one flap. Embodiments of the disclosure may include estimating a bend angle. Here, the bend angle specifies the angle between at least one flap of a device and one or more portions of the device, which can be another flap or a fixed portion of the device. Embodiments of the disclosure may estimate a baseline distance based on the determined bend angle. The baseline distance specifies the distance between the cameras in the different flap(s).

According to various embodiments of the disclosure, a device may receive a selection of a mode for capturing media. Based on the mode selected by the user, the embodiments of the disclosure may perform an analysis of previews of the cameras in the at least one flap. Based on the analysis, an error metric may be determined, and the error metric may indicate whether the bend angle requires an adjustment for capturing the media properly. Embodiments of the disclosure may adjust the bend angle in order to nullify the error metric. The adjustment of the bend angle may determine a suitable baseline distance at which the media can be captured using the mode selected by the user.

According to the invention, modes in which the media is captured may be identified based on the analysis of the previews of the cameras in the flaps. For each of the media capture modes, a corresponding error metric exists The bend angle is adjusted to nullify the error metrics, and is adjusted so as to arrive at the suitable baseline distances at which the media capturing is performed in each of the identified modes.

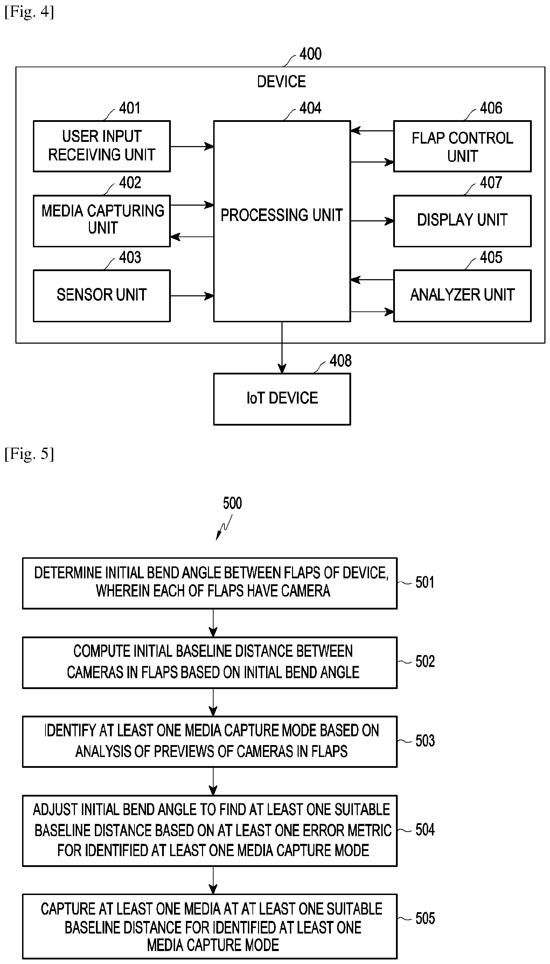

Referring now to the drawings, and more particularly to FIGS. 4 through 12, where similar reference characters denote corresponding features consistently throughout the figures, there are shown preferred embodiments.

FIG. 4 depicts various units of a device for capturing media in multiple modes according to various embodiments of the disclosure. A device 400 can be a flexible electronic device, including two flaps, which are bendable. According to an embodiment of the disclosure, the device 400 may include one or more portions, wherein at least one portion of the device 400 can be flipped to an open position and another portion can be static. Embodiments of the disclosure refer to each portion of the device 400 as a flap. Each flap includes a camera. In various embodiments of the disclosure, the device 400 can be a device with a bendable display. The device 400 can be, but is not limited to, mobile phones, smart phones, tablets, computers, laptops, wearable computing devices, or internet of things (IoT) devices. The device 400 may capture media such as one or more image or one or more video.

Referring to FIG. 4, the device 400 may include a user input receiving unit 401, a media capturing unit 402, a sensor unit 403, a processing unit 404, an analyzer unit 405, a flap control unit 406, and a display unit 407. According to an embodiment of the disclosure, the device 400 may be connected to at least one IoT device.

According to various embodiments of the disclosure, the user input receiving unit 401 may provide inputs, which have been received from a user, to the device 400. The user input receiving unit 401 may include, but is not limited to, at least one of the display unit 407, a touchscreen display, at least one switch, or at least one sensor. The user input receiving unit 401 may receive inputs from a user intending to capture media. In an embodiment of the disclosure, the input received from the user may include a selection of a media capture mode. In an example, the media capture mode can be wide-angle selfie, near/far field focus, three dimensional (3D) reconstruction, object tracking, cinematic shot, panorama, and so on.

The media capturing unit 402 can capture the media based on the received user inputs. According to various embodiments of the disclosure, the media capturing unit 402 may include at least one camera. The sensor unit 403 can determine an angle between the flaps of the device 400 (hereinafter referred to as initial bend angle). The sensor unit 403 can estimate an initial noise. The processing unit 404 can receive the user inputs from the user input receiving unit 401, and the initial bend angle from the sensor unit 403. The processing unit 404 can compute an initial baseline distance (i.e., a distance between the cameras in the flaps) based on the initial bend angle. The processing unit 404 can store the initial bend angle and the initial baseline distance.

A user can select a particular media capture mode to capture the media. The user can indicate the selection to the device 400 through the user input receiving unit 401. The processing unit 404 can receive the user input. Based on the selected media capture mode, the processing unit 404 can direct the analyzer unit 405 to analyze previews of the cameras in the media capturing unit 402. The processing unit 404 can retrieve the previews of the cameras from the media capturing unit 402. The processing unit 404 can control and manage the settings of the media capturing unit 402, according to the selected media capture mode.

The analyzer unit 405 can obtain the previews from the processing unit 404. The analyzer unit 405 can analyze the content of the previews of the cameras. The previews can include objects and/or subjects, which can be detected by the analyzer unit 405. The analysis of the preview can include at least one of saliency detection (if a salient object is detected), face detection (if a person is detected), eye/pupil detection, facial expression detection, object tracking (if a moving object is detected), blur detection (if occurrence of blurring is detected while capturing the moving object), determining depth and disparity of objects detected in the previews, determining registration errors (such as errors that occur when attempting to capture a cinematic shot or panorama), or pose estimation.

The analyzer unit 405 can provide a feedback of the analysis of the previews to the processing unit 404. Based on the feedback received from the analyzer unit 405, the processing unit 404 can compute an error metric, if any. The error metric can depend on the media capture mode selected by the user. The error metric can be, for example, peak signal to noise ratio (PSNR), structural similarity (SSIM) on an overlap/stitch area, and so on. In order to perfectly capture the media (with a high quality), the processing unit 404 should nullify the error metric. The processing unit 404 can nullify the error metric by adjusting the bend angle between the flaps. When the bend angle is adjusted, the baseline distance between cameras included in the flaps is also adjusted. The processing unit 404 can nullify the error metric for the selected media capture mode by detecting a suitable baseline distance corresponding to the selected media capture mode through the adjustment of the bend angle.

The processing unit 404 can direct the flap control unit 406 to adjust the bend angle of the cameras in the flaps of the device 400, and when the baseline distance between the cameras changes according to the adjustment of the bend angle, the error metric can be nullified. The bend angle can be adjusted automatically by the device 400 or manually by the user. The device 400 can adjust the bend angle using an electronically controlled hinge mechanism or gyro angle based estimation.

The processing unit 404 can detect a suitable baseline distance corresponding to the selected capture mode by determining whether the error metric is nullified by the adjustment of the bend angle. For instance, when the bend angle is adjusted to find the suitable baseline distance, the analyzer unit 405 can retrieve the previews from the media capturing unit 402 through the processing unit 404. The analyzer unit 405 can perform an analysis of the previews and send the feedback to the processing unit 404. The processing unit 404 can compute the error metric and confirm whether the error metric is nullified.

When the error metric has been nullified, the processing unit 404 can allow or direct the media capturing unit 402 to capture the media. The processing unit 404 can retrieve the captured media from the media capturing unit 402 and deliver the captured media to the display unit 407. The display unit 407 can display the captured media to the user.

In accordance with the invention, a user may not select a particular media capture mode to capture media. For example, when the user directs the media capturing unit 402 to capture the media, media capturing can be performed in a predefined or default media capture mode(s). For another example, when the user does not select a particular media capture mode, the processing unit 404 identifies possible media capture mode(s) in which media can be captured. The processing unit 404 directs the analyzer unit 405 to analyze previews of the cameras. The processing unit 404 retrieves the previews of the cameras and sends the retrieved previews to the analyzer unit 405.

The analyzer unit 405 can analyze the content of the previews of the cameras in the flaps of the device 400 at the initial bend angle and the initial baseline distance. The analyzer unit 405 can provide a feedback of the analysis of the previews to the processing unit 404. Based on the feedback received from the analyzer unit 405, the processing unit 404 can identify the possible media capture mode(s), among all the predefined media capture modes, for capturing the media.

When the media capture mode(s) are identified, the media can be captured. If a plurality of media capture modes is identified, then media can be captured for each of the identified media capture modes. The processing unit 404 can compute the error metric(s) of the media captured for each of the identified media capture mode(s). If the error metric of a particular media capture mode is nullified or less, then media can be captured in that particular media capture mode. However, if the error metric(s) is higher than a tolerable limit for the identified media capture mode(s), as computed by the processing unit 404, the error metrics should be nullified. The error metric(s) of the media capture mode(s) can be nullified by adjusting the bend angle between the flaps of the device 400. When the error metric of a particular media capture mode is nullified, then media can be captured in the particular media capture mode.

A bend angle of the device 400 is adjusted such that the error metric(s) of all the identified media capture mode(s) are nullified. The processing unit 404 can direct the flap control unit 406 to adjust the position of the cameras (bend angle) so as to adjust the baseline distance(s), and thus the error metric(s) of all the identified media capture mode(s) are nullified.

When the error metric(s) is nullified, the processing unit 404 allows or directs the media capturing unit 402 to capture the media using the identified media capture mode(s). The processing unit 404 can retrieve the captured media from the media capturing unit 402 and deliver the captured media to the display unit 407. The display unit 407 can display the captured media to the user.

The captured media can be of high quality. According to various embodiments of the disclosure, the device 400 is capable of reproducing scenes as viewed by the human eye, thereby providing an enhanced user experience.

The device 400 can control the IoT device 408 through the processing unit 404. For example, consider that the device 400 is in an environment wherein the lighting is dim. The sensor unit 403 can determine that the lighting is low. The analyzer unit 405 can obtain previews from the media capturing unit 402 and determine that the user is engaged in reading content. In such circumstances, the processing unit 404, based on a feedback from the analyzer unit 405, can direct the IoT device 480 to increase the lighting in the user environment. It is assumed that the IoT device 408 can control the lighting in the user environment.

FIG. 4 shows various units of the device 400, but it should be understood that the present disclosure is not limited thereto. According to various embodiments of the disclosure, the device 400 may include fewer or a greater number of units. Further, the labels or names of the units can be used only for illustrative purpose and do not limit the scope of the disclosure. One or more units can be combined together to perform same or substantially similar function in the device 400.

FIG. 5 is a flowchart depicting a method for capturing media using at least one media capture mode of the device 400 according to the invention. At operation 501 of the method 500, the device 400 determines an initial bend angle between the flaps. At operation 502, the device 400 may compute an initial baseline distance based on the initial bend angle.

At operation 503, the device 400 identifies at least one media capture mode based on an analysis of previews of the cameras included in the flaps. For example, the media capture modes might be wide-angle selfie, near/far field focus, 3D reconstruction, object tracking, cinematic shot, or panorama. The device 400 retrieves the previews from the cameras. When the previews have been retrieved from the cameras, the device 400 identifies at least one media capture mode which is available in the device 400 through the analysis of the previews. A predefined number of media capture modes for the device 400 may exist, and based on the analysis of previews, the at least one media capture mode among the predefined number of media capture modes is identified.

At operation 504, the device 400 adjusts the initial bend angle based on at least one error metric for the identified at least one media capture mode, and find at least one suitable baseline distance corresponding to the at least one media capture mode. For example, when two media capture modes are identified with respect to the device 400, the device 400 may determine the error metrics for the two media capture modes. The error metrics are determined based on the analysis of the previews. The device 400 adjusts the initial bend angle based on the determined error metrics to nullify the error metrics. According to various embodiments of the disclosure, the initial bend angle is adjusted so as to arrive at a first bend angle. The device 400 may determine whether the computed baseline distance at the first bend angle is suitable for the first media capture mode. When it is determined that the computed baseline distance for the first media capture mode is suitable, the error metric corresponding to the first media capture mode can be nullified. When it is determined that the computed baseline distance for the first media capture mode is not suitable, the device 400 can continuously adjust the bend angle to arrive at the second bend angle. The device 400 can determine whether the computed baseline distance at the second bend angle is suitable for the second media capture mode. When it is determined that the computed baseline distance for the second media capture mode is suitable, the error metric corresponding to the second media capture mode can be nullified. When it is determined that the computed baseline distance for the second media capture mode is not suitable, the device 400 can adjust the bend angle until a suitable baseline distance, at which the error metric is nullified, is to be found.

According to various embodiments of the disclosure, a first media capture mode can be wide-angle selfie. When a plurality of subjects are detected in the previews, a device 400 may perform face detection for the plurality of subjects. The error metric might be a subject missing or a portion of a subject missing. The error metric may be nullified by adjusting the bend angle in order to increase the FoV of the cameras. According to various embodiments of the disclosure, a second media capture mode can be near/far field focus. When the previews include multiple objects, the device 400 may detect a plurality of objects. The error metric can be a lack of focus on a particular object with a certain depth. The device 400 adjusts the bend angle in order to obtain a focus on the particular object so that the error metric can be nullified.

At operation 505, the device 400 captures at least one media at the at least one suitable baseline distance determined for the at least one media capture_mode. For example, the device 400 may capture a first media when the error metric corresponding to the first media capture mode is nullified. When the error metric is nullified, the first media can be captured to include all the subjects within the FoV of the cameras.

For another example, the device 400 may capture a second media when the error metric corresponding to the second media capture mode is nullified. When the error metric is nullified, the second media can be captured to focus on the particular object.

In an embodiment of the disclosure, when two media capture modes are identified, two suitable baseline distances are sequentially determined by continuously adjusting the bend angle. Each media capture mode was considered to have a single suitable baseline distance. However, according to various embodiments of the disclosure, multiple media capture modes may be identified, wherein each of the identified media capture modes may have multiple suitable baseline distances. The suitable baseline distances corresponding to different media capture modes may be determined simultaneously (i.e., a same baseline distance may be suitable for multiple media capture modes) or sequentially determined. When the identified media capture mode has multiple suitable baseline distances (for example: cinematic shot, panorama, object tracking, etc.), media can be captured at the suitable baseline distances.

The various actions in the method 500 may be performed in the order presented in FIG. 5, in a different order, or simultaneously. Further, in some embodiments, some actions listed in FIG. 5 may be omitted.

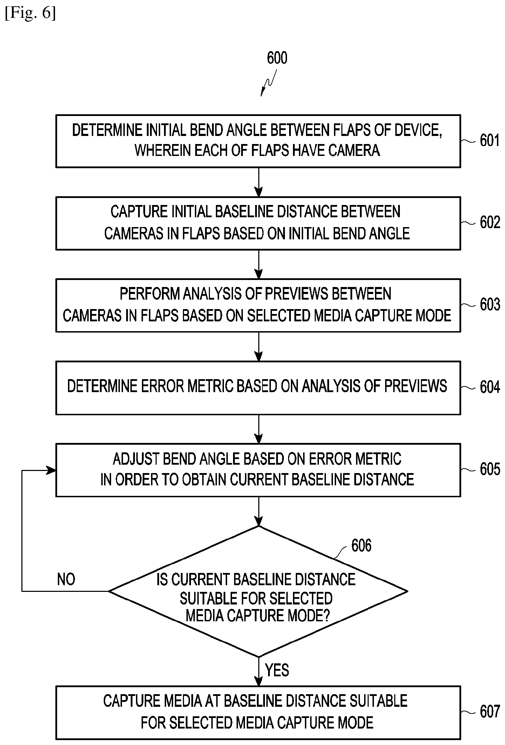

FIG. 6 is a flowchart depicting a not claimed method for capturing media, using the device 400, in a media capture mode selected by a user. At operation 601 of the method 600, the device 400 determines an initial bend angle between the flaps. At operation 602, the device 400 may compute an initial baseline distance based on the determined initial bend angle. At operation 603, the device 400 may perform an analysis of previews of the cameras, included in the flaps, based on the media capture mode selected by a user input. The analysis of the previews can be performed at the initial bend angle which is computed corresponding to the initial bend angle. For example, when the selected media capture mode is object tracking, the device 400 may analyze the previews at the initial baseline distance to detect objects in motion.

At operation 604, the device 400 may determine an error metric based on the analysis of the previews. When the initial baseline distance is suitable for capturing the media in the selected media capture mode, there will be no error metric. When there is no error metric, the device 400 may obtain at least one media by performing image capturing in the selected media capture mode at the initial baseline distance. According to various embodiments of the disclosure, the existence of the error metric, however, may indicate that the initial baseline distance is not suitable for capturing the media in the selected media capture mode. For example, the device 200 may determine whether the background is likely to be blurred when a shot is captured. The determination on whether or not blur occurs may be made based on the error metric, which corresponds to a type of the selected media capture mode.

At operation 605, the device 400 may adjust the bend angle between the flaps based on the determined error metric. In order to capture the media, the error metric should be nullified. The error metric can be nullified by adjusting the bend angle. When the bend angle has been adjusted, the baseline distance between cameras included in the flaps may be determined.

At operation 606, the device 400 may determine whether the determined baseline distance is suitable for nullifying the error metric for the selected media capture mode. As the bend angle between the flaps has been adjusted, there is a possibility for finding the suitable baseline distance corresponding to the selected media capture mode. When image capturing is performed at the suitable baseline distance, the device 400 may acquire media having a good quality in the selected media capture mode. According to various embodiments of the disclosure, the device 400 may verify whether the determined baseline distance is suitable. When it is determined that the error metric for the selected media capture mode is nullified, the device 400 may determine that the determined baseline distance is suitable for the selected media capture mode. When it is determined that the error metric for the selected media capture mode is not nullified, the device 400 may determine that the determined baseline distance is not suitable for the selected media capture mode, and perform the operation 605 again. The device 400 may continuously adjust the bend angle until a suitable baseline distance is obtained.

When it is determined that the determined baseline distance is suitable for the selected media capture mode, at operation 607, the device 400 may capture the media at the determined baseline distance in the selected media capture mode. For example, when the media capture mode is object tracking, the device 400 may discover multiple suitable baseline distances at which the detected object can be captured. In relation to the respective baseline distances, the device 400 may verify the nullification of the error metric (e.g., blurring of the background) and then perform image capturing in the object tracking mode.

Operations in the flowchart 600 may be performed in the order presented, in a different order, or simultaneously. Further, in some embodiments, some operations listed in FIG. 6 may be omitted.

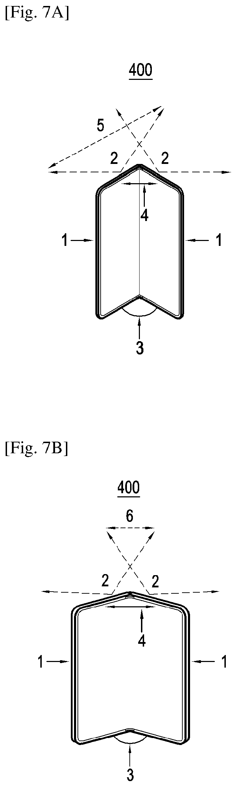

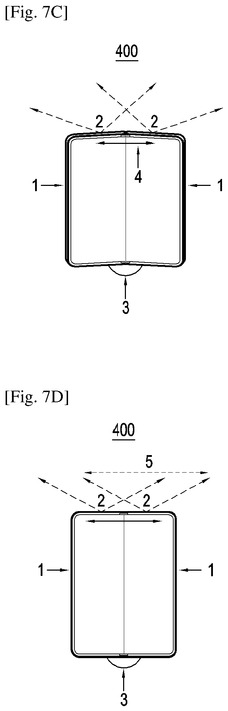

FIGS. 7A, 7B, 7C, and 7D depicts baseline distances and FoV of cameras, which varies corresponding to adjustment of the bend angle, according to various embodiments of the disclosure. According to various embodiments of the disclosure, the device 400 may include two flaps (labeled as '1') and two cameras (labeled as '2'). Each of the two flaps may include a single camera. The angle between the flaps (labeled as '3') is the bend angle. The distance between the cameras (labeled as '4') is a baseline distance. Each camera has FoV (labeled as '5') and there is a region of overlap between the FoVs of the cameras (labeled as '6'). When the bend angle between the flaps varies, baseline distance between the cameras may vary, and the region of FoV of the cameras may overlap.

Referring to FIG. 7A, the bend angle and the baseline distance depicted can be considered to be the initial bend angle and the initial baseline distance.

Referring to FIGS. 7B to 7D, the bend angle between the flaps is progressively varied according to various embodiments of the disclosure. For example, the device 400 can be configured to capture media in a single media capture mode or multiple media capture modes. At least one suitable baseline distance corresponding to each mode can be obtained by varying the bend angle so as to arrive at a suitable bend angle. The device 400 may capture at least one media at the at least one suitable baseline distance corresponding to the media capture mode(s).

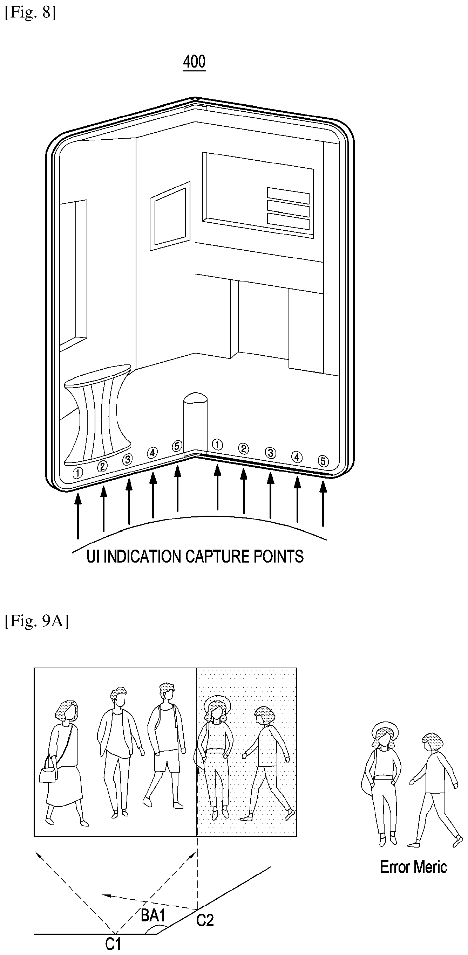

FIG. 8 depicts a user interface (UI) for controlling a bend angle between flaps when media capturing is performed using the device 400 according to various embodiments of the disclosure.

Referring to FIG. 8, the UI may include a plurality of buttons. The plurality of buttons may correspond to different multiple bend angles, respectively. When the user selects one of the buttons displayed on the UI, the device 400 may adjust the bend angle to an angle corresponding to the selected button, and thus the cameras may be aligned at a particular angle at which the cameras can capture the media. In another embodiment, one of the plurality of buttons can be configured to indicate the current bend angle or the range in which the current bend angle lies.

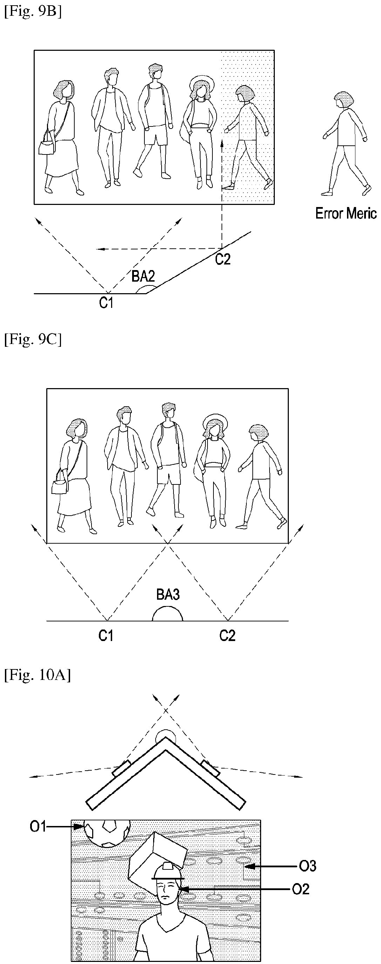

FIGS. 9A, 9B, and 9C depict an example scenario where a wide-angle selfie is captured by varying the bend angle between the flaps of the device 400, according to various embodiments of the disclosure. The device 400 may include two flaps, and each flap may include a single camera. In FIGS. 9A to 9C, cameras can be labeled as C1 and C2. The device 400 may detect five subjects based on the analysis of the preview of C1 and C2, and determine the bend angle between the two flaps and the baseline distance at the bend angle so as to acquire media including all of the detected subjects. The bend angle BA1, depicted in FIG. 9A, can be considered as the initial bend angle.

Referring to FIG. 9A, the FoV of C2 is not sufficient to capture all the subjects. In FIG. 9A, the portion of the preview, which is not within the FoV of C1 and C2, can be determined as the error metric.

In order to capture the wide-angle selfie, the error metric should be nullified. As depicted in FIG. 9B, the bend angle may be adjusted to arrive at a current bend angle BA2.

Referring to FIG. 9B, the FoV of C2 may cover a greater portion of the preview, as compared to the FoV of C2 depicted in FIG. 9A. The device may verify whether the baseline distance according to the bend angle BA2 is suitable. In FIG. 9B, since all the detected subjects are not covered, the device may determine that the baseline distance at the bend angle BA2 is not suitable.

Referring to FIG. 9C, the device 400 may adjust the bend angle between the flaps so that the bend angle arrives at the bend angle BA3. The device 400 may verify whether the baseline distance at BA3 is suitable. For example, when it is determined that the FoV of C2 at BA3 covers the entire preview, the device 400 determines that the error metric at the bend angle BA3 is nullified, and determine that the baseline distance at the bend angle BA3 is suitable for capturing the wide-angle selfie of the preview.

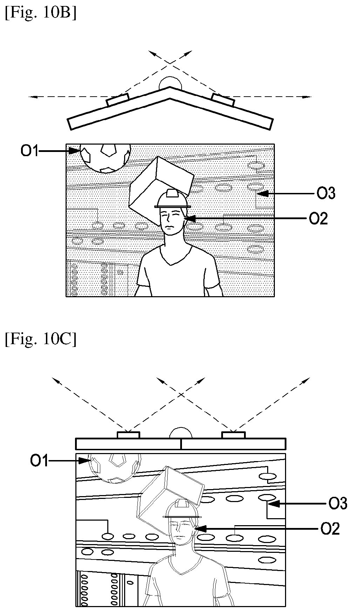

FIGS. 10A, 10B, and 10C depict an example where selective focus of objects at various depths is achieved by varying the bend angle between the flaps of the device 400, according to various embodiments of the disclosure. The device 400 includes two flaps, and each flap includes a single camera. The device 400 may detect three objects at different depths based on the analysis of the previews of the cameras. The detected objects can be labeled as O1, O2, and O3. The depths of the objects may increase in the order of 01, 02, and O3. The device 400 may determine the bend angle and the baseline distance at the bend angle.

Referring to FIG. 10A, at the bend angle, the device 400 may selectively focus on O1. For attaining a Bokeh effect, the remaining objects can be blurred. The device 400 may adjust the bend angle between the flaps so that the bend angle arrives at the bend angle depicted in FIG. 10B.

Referring to FIG 10B, at the bend angle, the device 400 can selectively focus on O2. Similarly, the device 400 may adjust the bend angle between the flaps so that the bend angle arrives at the bend angle depicted in FIG. 10C.

Referring to FIG. 10C, at the bend angle, the embodiments can selectively focus on O3. Once the intended objects are focused selectively, the other objects can be blurred for attaining the Bokeh effect.

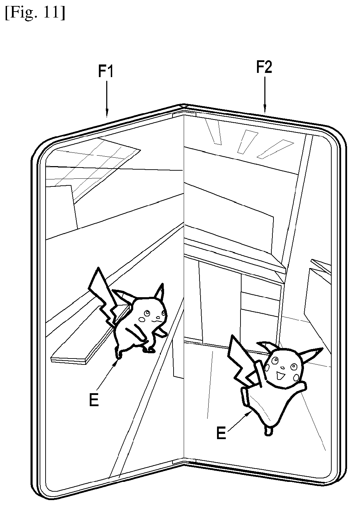

FIG. 11 depicts an example wherein the experience of augmented reality (AR) objects is visually enhanced by adjustment of bend angle between the flaps of the device, according to various embodiments of the disclosure.

Referring to FIG. 11, by adjusting the bend angle between the flaps (labeled as F1 and F2), the FoVs of the cameras in the flaps can be increased. According to various embodiments of the disclosure, the AR object can be an emoticon (emoji). The device 400 allow seamless transfer of the emoticon (labeled as 'E') from display of F1 to display of F2. According to various embodiments of the disclosure, the device 400 may display the emoticon simultaneously in F1 and F2. The device 400 can visualize same or different AR effects on the emoticon displayed on the displays of F1 and F2, and perform better surface scanning in AR space and a detailed rendering of the emoticon.

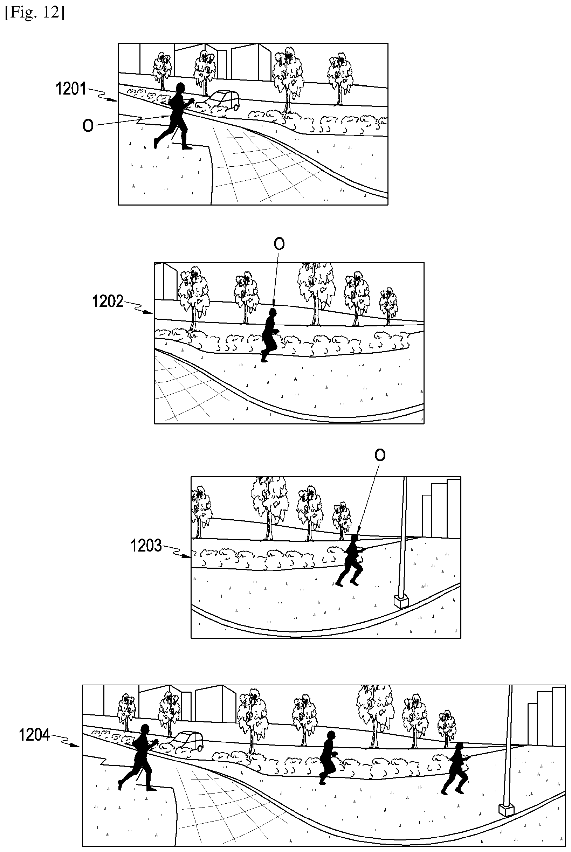

FIG. 12 depicts an example where a cinematic shot is captured and an object is tracked without registration error and blurring of the background, according to the related art. According to various embodiments of the disclosure, the device 400 can automatically identify that the media capture modes having been configured in camera are a cinematic shot and object tracking. The media capture modes can be identified based on a user input indicating selection of either cinematic shot or object tracking. A plurality of suitable baseline distances may be determined by adjusting the bend angle of the flaps of the device 400. A plurality of shots 1201, 1202, and 1203 can be captured at the plurality of suitable baseline distances, respectively. The device 400 can obtain a cinematic shot 1204 by merging the captured shots 1201, 1202, and 1203.

Referring to FIG. 12, since the cinematic shot 1204 is generated from the plurality of shots 1201, 1202, and 1203 captured at the plurality of suitable baseline distances, respectively, background blurring and registration error does not occur in the cinematic shot 1204.

According to various embodiments of the disclosure, when an object (labeled as O) to be tracked is detected, the bend angle between flaps can be adjusted automatically using electronically controlled hinge mechanism, gyro angle based estimation, and so on. The adjustment of the bend angle can aid in determining the suitable baseline distances.

The embodiments disclosed in the disclosure can be implemented through at least one software program running on at least one hardware device and performing network management functions to control the network elements. The network elements shown in FIG. 4 include blocks which can be at least one of a hardware device, or a combination of hardware device and software module.

The embodiments disclosed in the disclosure include a method and a device. Therefore, it is understood that the scope of the protection could be extended to such a program and in addition to a computer readable means having a message therein (which are both not claimed), such computer readable storage means contain program code means for implementation of one or more steps of the method, when the program runs on a server or mobile device or any suitable programmable device. A method according to various embodiments of the disclosure is implemented in a software program written in e.g. very high speed integrated circuit hardware description language (VHDL) another programming language, or implemented by one or more VHDL or several software modules being executed on at least one hardware device. The hardware device can be any kind of portable device that can be programmed. A device according to various embodiments of the disclosure may also include means which could be e.g. hardware means like an application-specific integrated circuit (ASIC), or a combination of hardware and software means, e.g. an ASIC and a field programmable gate array (FPGA), or at least one microprocessor and at least one memory with software modules located therein. Embodiments described herein could be implemented partly in hardware and partly in software. Alternatively, the disclosure may be implemented on different hardware devices, e.g., using a plurality of central processing units (CPUs).

The scope of the claimed solution is solely defined in the appended claims.

## Claims

1. A method for capturing a video or an image by using a device (400), the method comprising:
analyzing preview images captured by each of two cameras (2), wherein each of the two cameras (2) is included in a respective one of two flaps (1) of the device (400);
identifying at least one capture mode from a plurality of capture modes based on an analysis of the preview images, the plurality of capture modes including wide-angle selfie, near/far field focus, 3D reconstruction, object tracking, cinematic shot, and panorama;
adjusting a bend angle (3) between the two flaps (1) based on an error metric for the identified capture mode, wherein the error metric is a criterion indicating whether the bend angle is appropriate for the identified capture mode and wherein a corresponding error metric exists for each of the capture modes;
determining a baseline distance (4) indicating a distance between the two cameras (2) based on the adjusted bend angle; and
obtaining the video or the image in the identified capture mode at the determined baseline distance (4), and
wherein the adjusting of the bend angle (3) comprises adjusting the bend angle (3) between the two flaps until the error metric is nullified.

2. The method of claim 1, wherein the preview images are captured at an initial bend angle between the cameras (2).

3. The method of claim 1, further comprising automatically adjusting the bend angle (3).

4. The method of claim 1, wherein the determining of the baseline distance (4) comprises:
computing the error metric for the identified capture mode based on the analyzing of the preview images captured by each of the cameras (2);
adjusting the bend angle (3) to a first angle (3) by changing a position of a first flap (1) among the two flaps (1);
analyzing the preview images captured by each of the cameras (2) at a first baseline distance (4) according to the first angle (3); and
determining whether the error metric for the identified capture mode is nullified, based on the analyzed preview images at the first baseline distance (4).

5. The method of claim 4, further comprising, in response to determining that the error metric for the identified capture mode is nullified, determining the first baseline distance (4) as a baseline distance (4) corresponding to the identified capture mode.

6. The method of claim 4, further comprising:
adjusting the bend angle (3) to a second bend angle (3) in response to determining that the error metric for the identified capture mode is not nullified;
analyzing the preview images captured by each of the cameras (2) at a second baseline distance (4) according to the second bend angle (3);
determining whether the error metric for the identified capture mode is nullified, based on the analyzed preview images at the second baseline distance (4); and
determining, as a baseline distance (4) corresponding to the identified capture mode, the second baseline distance (4) at which the error metric for the identified capture mode is nullified.

7. A device (400) for capturing a video or an image, the device (400) comprising:
two flaps (1), wherein each of the flaps (1) includes a camera (2); and
a processor (404) configured to:
analyze preview images captured by each of the cameras (2),
identify at least one capture mode from a plurality of capture modes based on an analysis of the preview images, the plurality of capture modes including wide-angle selfie, near/far field focus, 3D reconstruction, object tracking, cinematic shot, and panorama,
adjust a bend angle (3) between the two flaps (1) based on an error metric for the identified capture mode, wherein the error metric is a criterion indicating whether the bend angle is appropriate for the identified capture mode and wherein a corresponding error metric exists for each of the capture modes,
determine a baseline distance (4) indicating a distance between the two cameras (2) based on the adjusted bend angle, and
obtain the video or the image in the identified capture mode at the determined baseline distance (4), and
wherein the adjusting of the bend angle (3) comprises adjusting the bend angle (3) between the two flaps until the error metric is nullified.

8. The device (400) as of claim 7, further comprising a flap controller (406) for adjusting the bend angle (3),
wherein the preview images are captured at an initial bend angle (3) between the cameras (2).

9. The device (400) of claim 7, wherein the processor (404) is further configured to:
compute the error metric for the identified capture mode based on the analyzing of the preview images captured by each of the cameras (2),
adjust the bend angle (3) to a first angle (3) by changing a position of a first flap (1) among the two flaps (1),
analyze the preview images captured by each of the cameras (2) based on the first baseline distance (4) according to the first angle (3), and
determine whether the error metric for the identified capture mode is nullified, based on the analyzed preview images at the first baseline distance (4).

10. The device (400) of claim 9, wherein, in response to determining that the error metric for the identified capture mode is nullified, the processor (404) is further configured to determine the first baseline distance (4) as a baseline distance (4) corresponding to the identified capture mode.

11. The device (400) of claim 9, wherein the processor (404) is further configured to:
adjust the bend angle (3) to a second bend angle (3) in response to determining that the error metric for the identified capture mode is not nullified;
analyze the preview images captured by each of the cameras (2) at a second baseline distance (4) according to the second bend angle (3);
determine whether the error metric for the identified capture mode is nullified, based on the analyzed preview images at the second baseline distance (4); and
determine, as a baseline distance (4) corresponding to the identified capture mode, the second baseline distance (4) at which the error metric for the identified capture mode is nullified.

## Patentansprüche

1. Verfahren zum Aufnehmen eines Videos oder eines Bildes unter Verwendung einer Vorrichtung (400), wobei das Verfahren umfasst:
Analysieren von Vorschaubildern, die von jeder der beiden Kameras (2) aufgenommen wurden, wobei jede der beiden Kameras (2) in jeweils einer von zwei Klappen (1) der Vorrichtung (400) enthalten ist;
Identifizieren von mindestens einem Aufnahmemodus aus einer Vielzahl von Aufnahmemodi auf der Grundlage einer Analyse der Vorschaubilder, wobei die Vielzahl von Aufnahmemodi Weitwinkel-Selfie, Nah-/Fernfeldfokus, 3D-Rekonstruktion, Objektverfolgung, filmische Aufnahme und Panorama umfasst;
Einstellen eines Biegewinkels (3) zwischen den beiden Klappen (1) auf der Grundlage einer Fehlermetrik für den identifizierten Aufnahmemodus, wobei die Fehlermetrik ein Kriterium ist, das anzeigt, ob der Biegewinkel für den identifizierten Aufnahmemodus geeignet ist, wobei eine entsprechende Fehlermetrik für jeden der Aufnahmemodi existiert;
Bestimmen eines Basislinienabstands (4), der einen Abstand zwischen den beiden Kameras (2) basierend auf dem eingestellten Biegewinkel anzeigt; und
Erhalten des Videos oder des Bildes im identifizierten Aufnahmemodus beim bestimmten Basislinienabstand (4), und
wobei das Einstellen des Biegewinkels (3) das Einstellen des Biegewinkels (3) zwischen den beiden Klappen umfasst, bis die Fehlermetrik aufgehoben ist.

2. Verfahren nach Anspruch 1, wobei die Vorschaubilder bei einem anfänglichen Biegewinkel zwischen den Kameras (2) aufgenommen werden.

3. Verfahren nach Anspruch 1, ferner umfassend die automatische Einstellung des Biegewinkels (3).

4. Verfahren nach Anspruch 1, wobei die Bestimmung des Basislinienabstands (4) umfasst:
Berechnen der Fehlermetrik für den identifizierten Aufnahmemodus auf der Grundlage der Analyse der von jeder der Kameras (2) aufgenommenen Vorschaubilder;
Einstellen des Biegewinkels (3) auf einen ersten Winkel (3) durch Verändern einer Position einer ersten Klappe (1) unter den beiden Klappen (1);
Analysieren der Vorschaubilder, die von jeder der Kameras (2) in einem ersten Basislinienabstand (4) gemäß dem ersten Winkel (3) aufgenommen wurden; und
Bestimmen, ob die Fehlermetrik für den identifizierten Aufnahmemodus aufgehoben ist, basierend auf den analysierten Vorschaubildern im ersten Basislinienabstand (4).

5. Verfahren nach Anspruch 4, das ferner umfasst, dass in Reaktion auf die Feststellung, dass die Fehlermetrik für den identifizierten Aufnahmemodus aufgehoben ist, der erste Basislinienabstand (4) als ein Basislinienabstand (4) bestimmt wird, der dem identifizierten Aufnahmemodus entspricht.

6. Verfahren nach Anspruch 4, ferner umfassend:
Einstellen des Biegewinkels (3) auf einen zweiten Biegewinkel (3) in Reaktion auf die Feststellung, dass die Fehlermetrik für den identifizierten Aufnahmemodus nicht aufgehoben ist;
Analysieren der Vorschaubilder, die von jeder der Kameras (2) in einem zweiten Basislinienabstand (4) gemäß dem zweiten Biegewinkel (3) aufgenommen wurden;
Bestimmen, ob die Fehlermetrik für den identifizierten Aufnahmemodus aufgehoben ist, basierend auf den analysierten Vorschaubildern im zweiten Basislinienabstand (4); und
Bestimmen des zweiten Basislinienabstands (4), bei dem die Fehlermetrik für den identifizierten Aufnahmemodus aufgehoben ist, als Basislinienabstand (4), der dem identifizierten Aufnahmemodus entspricht.

7. Vorrichtung (400) zum Aufnehmen eines Videos oder eines Bildes, wobei die Vorrichtung (400) umfasst:
zwei Klappen (1), wobei jede der Klappen (1) eine Kamera (2) enthält; und
einen Prozessor (404), der konfiguriert ist zum:
Analysieren der von jeder der Kameras (2) aufgenommenen Vorschaubilder,
Identifizieren mindestens eines Aufnahmemodus aus einer Vielzahl von Aufnahmemodi auf der Grundlage einer Analyse der Vorschaubilder, wobei die Vielzahl von Aufnahmemodi Weitwinkel-Selfie, Nah-/Fernfeldfokus, 3D-Rekonstruktion, Objektverfolgung, filmische Aufnahme und Panorama umfasst,
Einstellen eines Biegewinkels (3) zwischen den beiden Klappen (1) auf der Grundlage einer Fehlermetrik für den identifizierten Aufnahmemodus, wobei die Fehlermetrik ein Kriterium ist, das anzeigt, ob der Biegewinkel für den identifizierten Aufnahmemodus geeignet ist, und wobei eine entsprechende Fehlermetrik für jeden der Aufnahmemodi existiert,
Bestimmen eines Basislinienabstands (4), der einen Abstand zwischen den beiden Kameras (2) auf der Grundlage des eingestellten Biegewinkels angibt, und
Erhalten des Videos oder des Bildes im identifizierten Aufnahmemodus beim bestimmten Basislinienabstand (4), und
wobei das Einstellen des Biegewinkels (3) das Einstellen des Biegewinkels (3) zwischen den beiden Klappen umfasst, bis die Fehlermetrik aufgehoben ist.

8. Vorrichtung (400) nach Anspruch 7, ferner umfassend eine Steuerung (406) für die Einstellung des Biegewinkels (3),
wobei die Vorschaubilder in einem anfänglichen Biegewinkel (3) zwischen den Kameras (2) aufgenommen werden.

9. Vorrichtung (400) nach Anspruch 7, wobei der Prozessor (404) ferner konfiguriert ist zum:
Berechnen der Fehlermetrik für den identifizierten Aufnahmemodus auf der Grundlage der Analyse der von jeder der Kameras (2) aufgenommenen Vorschaubilder,
Einstellen des Biegewinkels (3) auf einen ersten Winkel (3) durch Verändern einer Position einer ersten Klappe (1) unter den beiden Klappen (1),
Analysieren der von jeder der Kameras (2) aufgenommenen Vorschaubilder auf der Grundlage des ersten Basislinienabstands (4) gemäß dem ersten Winkel (3), und
Bestimmen, ob die Fehlermetrik für den identifizierten Aufnahmemodus aufgehoben ist, basierend auf den analysierten Vorschaubildern mit dem ersten Basislinienabstand (4).

10. Vorrichtung (400) nach Anspruch 9, wobei der Prozessor (404) als Reaktion auf die Feststellung, dass die Fehlermetrik für den identifizierten Aufnahmemodus aufgehoben ist, ferner konfiguriert ist, um den ersten Basislinienabstand (4) als einen Basislinienabstand (4) zu bestimmen, der dem identifizierten Aufnahmemodus entspricht.

11. Vorrichtung (400) nach Anspruch 9, wobei der Prozessor (404) ferner konfiguriert ist zum:
Einstellen des Biegewinkels (3) auf einen zweiten Biegewinkel (3) in Reaktion auf die Feststellung, dass die Fehlermetrik für den identifizierten Aufnahmemodus nicht aufgehoben ist;
Analysieren der von jeder der Kameras (2) aufgenommenen Vorschaubilder in einem zweiten Basislinienabstand (4) gemäß dem zweiten Biegewinkel (3);
Bestimmen, ob die Fehlermetrik für den identifizierten Aufnahmemodus aufgehoben ist, basierend auf den analysierten Vorschaubildern im zweiten Basislinienabstand (4); und
Bestimmen des zweiten Basislinienabstands (4), bei dem die Fehlermetrik für den identifizierten Aufnahmemodus aufgehoben wird, als Basislinienabstand (4), der dem identifizierten Aufnahmemodus entspricht.

## Revendications

1. Procédé de capture d'une vidéo ou d'une image à l'aide d'un dispositif (400), le procédé comprenant :
analyser des images de prévisualisation capturées par chacune de deux caméras (2), chacune des deux caméras (2) étant incluse dans l'un de deux volets (1) du dispositif (400) ;
identifier au moins un mode de capture à partir d'une pluralité de modes de capture sur la base d'une analyse des images de prévisualisation, la pluralité de modes de capture comprenant le selfie grand angle, la mise au point en champ proche/lointain, la reconstruction 3D, le suivi d'objet, la prise de vue cinématique, et le panorama ;
ajuster un angle de pliage (3) entre les deux volets (1) sur la base d'une métrique d'erreur pour le mode de capture identifié, la métrique d'erreur étant un critère indiquant si l'angle de pliage est approprié pour le mode de capture identifié et une métrique d'erreur correspondante existant pour chacun des modes de capture ;
déterminer une distance de ligne de base (4) indiquant une distance entre les deux caméras (2) sur la base de l'angle de pliage ajusté ; et
obtenir la vidéo ou l'image dans le mode de capture identifié à la distance de ligne de base déterminée (4), et
dans lequel le réglage de l'angle de pliage (3) comprend le réglage de l'angle de pliage (3) entre les deux volets jusqu'à ce que l'erreur métrique soit annulée.

2. Procédé de la revendication 1, dans lequel les images de prévisualisation sont capturées à un angle de pliage initial entre les caméras (2).

3. Procédé de la revendication 1, comprenant en outre le réglage automatique de l'angle de pliage (3).

4. Procédé de la revendication 1, dans lequel la détermination de la distance de ligne de base (4) comprend :
calculer la métrique d'erreur pour le mode de capture identifié sur la base de l'analyse des images de prévisualisation capturées par chacune des caméras (2) ;
ajuster l'angle de pliage (3) à un premier angle (3) en modifiant la position d'un premier volet (1) parmi les deux volets (1) ;
analyser les images de prévisualisation capturées par chacune des caméras (2) à une première distance de ligne de base (4) en fonction du premier angle (3) ; et
déterminer si la métrique d'erreur pour le mode de capture identifié est annulée, sur la base des images de prévisualisation analysées à la première distance de ligne de base (4).

5. Procédé de la revendication 4, comprenant en outre, en réponse à la détermination que la métrique d'erreur pour le mode de capture identifié est annulée, la détermination de la première distance de ligne de base (4) en tant que distance de ligne de base (4) correspondant au mode de capture identifié.

6. Procédé de la revendication 4, comprenant en outre :
ajuster l'angle de pliage (3) à un deuxième angle de pliage (3) en réponse à la détermination que la métrique d'erreur pour le mode de capture identifié n'est pas annulée ;
analyser les images de prévisualisation capturées par chacune des caméras (2) à une deuxième distance de ligne de base (4) en fonction du deuxième angle de pliage (3) ;
déterminer si la métrique d'erreur pour le mode de capture identifié est annulée, sur la base des images de prévisualisation analysées à la deuxième distance de ligne de base (4) ; et
déterminer, en tant que distance de ligne de base (4) correspondant au mode de capture identifié, la deuxième distance de ligne de base (4) à laquelle la métrique d'erreur pour le mode de capture identifié est annulée.

7. Dispositif (400) de capture d'une vidéo ou d'une image, le dispositif (400) comprenant :
deux volets (1), dans lesquels chacun des volets (1) comprend une caméra (2) ; et
un processeur (404) configuré pour :
analyser des images de prévisualisation capturées par chacune des caméras (2),
identifier au moins un mode de capture parmi une pluralité de modes de capture sur la base d'une analyse des images de prévisualisation, la pluralité de modes de capture comprenant le selfie grand angle, la mise au point en champ proche/lointain, la reconstruction 3D, le suivi d'objet, la prise de vue cinématique et le panorama,
ajuster un angle de pliage (3) entre les deux volets (1) sur la base d'une métrique d'erreur pour le mode de capture identifié, la métrique d'erreur étant un critère indiquant si l'angle de pliage est approprié pour le mode de capture identifié et une métrique d'erreur correspondante existant pour chacun des modes de capture,
déterminer une distance de ligne de base (4) indiquant une distance entre les deux caméras (2) sur la base de l'angle de pliage ajusté, et
obtenir la vidéo ou l'image dans le mode de capture identifié à la distance de ligne de base déterminée (4), et
dans lequel le réglage de l'angle de pliage (3) comprend le réglage de l'angle de pliage (3) entre les deux volets jusqu'à ce que l'erreur métrique soit annulée.

8. Dispositif (400) selon la revendication 7, comprenant en outre une commande de volet (406) pour régler l'angle de pliage (3),
dans lequel les images de prévisualisation sont capturées à un angle de pliage initial (3) entre les caméras (2).

9. Dispositif (400) de la revendication 7, dans lequel le processeur (404) est en outre configuré pour :
calculer la métrique d'erreur pour le mode de capture identifié sur la base de l'analyse des images de prévisualisation capturées par chacune des caméras (2),
ajuster l'angle de pliage (3) à un premier angle (3) en modifiant la position d'un premier volet (1) parmi les deux volets (1),
analyser les images de prévisualisation capturées par chacune des caméras (2) sur la base de la première distance de ligne de base (4) en fonction du premier angle (3), et
déterminer si la métrique d'erreur pour le mode de capture identifié est annulée, sur la base des images de prévisualisation analysées à la première distance de ligne de base (4).

10. Dispositif (400) de la revendication 9, dans lequel, en réponse à la détermination que la métrique d'erreur pour le mode de capture identifié est annulée, le processeur (404) est en outre configuré pour déterminer la première distance de ligne de base (4) comme une distance de ligne de base (4) correspondant au mode de capture identifié.

11. Dispositif (400) de la revendication 9, dans lequel le processeur (404) est en outre configuré pour :
ajuster l'angle de pliage (3) à un deuxième angle de pliage (3) en réponse à la détermination que la métrique d'erreur pour le mode de capture identifié n'est pas annulée ;
analyser les images de prévisualisation capturées par chacune des caméras (2) à une deuxième distance de ligne de base (4) en fonction du deuxième angle de pliage (3) ;
déterminer si la métrique d'erreur pour le mode de capture identifié est annulée, sur la base des images de prévisualisation analysées à la deuxième distance de ligne de base (4) ; et
déterminer, en tant que distance de ligne de base (4) correspondant au mode de capture identifié, la deuxième distance de ligne de base (4) à laquelle la métrique d'erreur pour le mode de capture identifié est annulée.
